# EUROPÄISCHE PATENTSCHRIFT

(11) **EP 3 740 911 B1**
(45) Veröffentlichungstag und Bekanntmachung des Hinweises auf die Patenterteilung: **03.07.2024**
(21) Anmeldenummer: 20710031.4
(22) Anmeldetag: 06.02.2020
(51) Int. Cl.: G06N 10/80, G06N 10/60

(54) **VERFAHREN ZUR MODELLIERUNG EINES SYSTEMS MITTELS EINES QUANTENCOMPUTERS**
METHOD FOR MODELLING A SYSTEM WITH A QUANTUMCOMPUTER
PROCÉDÉ À LA MODELISATION D'UN SYSTÈME PAR ORDINATEUR QUANTIQUE

(30) Priorität: 12.04.2019 DE 102019109816
(43) Veröffentlichungstag der Anmeldung: 25.11.2020
(73) Patentinhaber: HQS Quantum Simulations GmbH, 76131 Karlsruhe (DE)
(72) Erfinder: MARTHALER, Michael, 76137 Karlsruhe (DE); REINER, Jan-Michael, 76187 Karlsruhe (DE); ZANKER, Sebastian, 76227 Karlsruhe (DE); SCHWENK, Iris, 76185 Karlsruhe (DE)
(74) Vertreter: Christ, Niko
(86) Internationale Anmeldenummer: PCT/DE2020/100075
(87) Internationale Veröffentlichungsnummer: WO 2020/207519

(56) Entgegenhaltungen:
- US-A1- 2018 096 085
- DÓNAL MAC KERNAN ET AL: "Trotter-Based Simulation of Quantum-Classical Dynamics +", JOURNAL OF PHYSICAL CHEMISTRY PART B, Bd. 112, Nr. 2, 1. Januar 2008 (2008-01-01), Seiten 424-432, XP055689160, US ISSN: 1520-6106, DOI: 10.1021/jp0761416
- IRIS SCHWENK ET AL: "Distortion of a reduced equilibrium density matrix: Influence on quantum emulation", PHYSICAL REVIEW B, Bd. 93, Nr. 1, 1. Januar 2016 (2016-01-01) , Seiten 14305-1, XP055689158, ISSN: 2469-9950, DOI: 10.1103/PhysRevB.93.014305

## Beschreibung

Die vorliegende Erfindung betrifft ein Verfahren zur Modellierung eines Systems unter Zuhilfenahme eines Quantencomputers.

Das Funktionsprinzip eines Quantencomputers ist als theoretisches Konzept bereits seit langer Zeit bekannt und wird bereits seit einiger Zeit auch praktisch umgesetzt. Während in üblichen Digitalrechnern die Information in Bits dargestellt wird, welche prinzipiell Schalter in einer Ein- oder einer Aus-Stellung sind, wird die ebenfalls prinzipiell binäre Information im Quantenrechner durch quantenmechanische Zustände repräsentiert. Dies können üblicherweise der Spin eines Elektrons, Energieniveaus von Atomen oder die Stromrichtung, die Ladung oder der magnetische Fluss in einem Supraleiter sein. Unabhängig von der Wahl der physikalischen Implementierung wird ein solches quantenmechanisches Zweizustandssystem als Qubit bezeichnet.

Ein solcher Quantencomputer eignet sich in besonderem Maße für bestimmte Probleme, bei denen die benötigten Computerressourcen exponenziell mit der Systemgröße wachsen. Während für die Abbildung eines solchen Systems auf einen herkömmlichen Digitalrechner für jedes zusätzliche Systemelement, also beispielsweise eines Orbitals eines Moleküls oder einer Variable eines Optimierungsproblems, eine Verdopplung der Rechenleistung durch eine Verdopplung der Transistorenzahl und der Speicherkapazität erforderlich ist, erfordert eine solche Verdopplung der Rechenleistung beim Quantencomputer lediglich die Hinzunahme eines weiteren Qubits. Dies rührt daher, dass die den Zustand eines Quantenregisters, also eines Registers aus Qubits, beschreibenden Zustandsvektoren eine Überlagerung (Superposition) vieler Zustände, d.h. aller 2^{Anzahl der Qubits im Register} Zustände, sein können und die Überlagerungszustände voneinander abhängig sein können (sog. Verschränkung), so dass die Möglichkeiten, einen Zustand mit Qubits zu beschreiben, wesentlich umfangreicher sind.

Diesen Vorteil können derzeitige Quantencomputer jedoch momentan noch nicht ausspielen, da die Herstellung der Qubits derzeit noch sehr unvollkommen ist, mithin die natürlichen physikalischen Einschränkungen bei der Herstellung der Qubits noch nicht vollständig zufriedenstellend berücksichtigt werden können. Quantenmechanische Systeme sind intrinsisch störanfällig und weisen daher einen intrinsischen Fehler auf, der durch Interaktion mit der Umgebung herrührt. Dies führt zu den folgenden Problemen.

Die Relaxation bezeichnet in diesem Zusammenhang die Neigung des Systems, in einen Gleichgewichtszustand mit seiner Umgebung zu fallen. Dies kann beim Quantencomputer mit einem Zustandswechsel der Qubits einhergehen. Als Relaxationszeit T₁ wird die charakteristische Zeit bezeichnet, mit welcher sich das System seinem Gleichgewichtszustand annähert.

Unter der Dekohärenz versteht man den Verlust des quantenmechanischen Zustands zugunsten eines klassisch beschreibbaren Zustands. Auch hier stellt die Dekohärenzzeit T₂ den charakteristischen Zeitraum dar, in welchem ein solcher Wechsel von einem quantenmechanischen Zustand zu einem klassisch beschreibbaren Zustand stattfindet.

Bei derzeit verfügbaren Quantencomputern besteht aufgrund derzeit noch nicht ausgereifter Fertigungstechnik das Problem, dass nicht alle Qubits eines Quantencomputers die gleiche Qualität im Hinblick auf Relaxation und insbesondere Dekohärenz aufweisen. Auch ist die Güte (Fidelity), mit der Operationen auf den Qubits durchgeführt wird, niedrig, was ebenfalls eine große Rolle spielt. So kann als hochperformantes Qubit angesehen werden, welches eine lange Dekohärenzzeit besitzt und auf welches Operationen mit großer Güte angewandt werden können, während ein Qubit mit einer kurzen Dekohärenzzeit und schlechter Operationsgüte als niederperformantes Qubit angesehen wird.

Um mit den derzeit verfügbaren Quantencomputern folglich ein System zu modellieren, also dessen Verhalten zu simulieren, können entweder nur die hochperformanten Qubits eingesetzt werden, oder es muss mit Fehlerkorrekturen gearbeitet werden. Die erste dieser Möglichkeiten beschränkt die Einsatzgebiete der Quantencomputer ganz erheblich, da derzeitige Quantencomputer lediglich über 50 bis 70 Qubits verfügen. Wird für jedes Systemelement nur ein Qubit zur Darstellung benötigt, so können bei einem Wegfall der niederperformanten Qubits nur sehr einfache Systeme modelliert werden, was jedoch auch bereits mithilfe von Digitalrechnern möglich ist. Wird hingegen eine Fehlerkorrektur angestrebt, so steigt der erforderliche Einsatz an Qubits hierfür um ein Vielfaches (5000-fach), so dass eine solche Fehlerkorrektur bei dem derzeitigen Entwicklungsstand noch nicht sinnvoll umsetzbar ist.

Insbesondere ist aus der Publikation von Donal Mac Kernan et al. (Dónal mac Kernan et al., "Trotter-Based Simulation of Quantum Classical Dynamics", Journal of Physical Chemistry Part B, Bd. 112, Nr. 2, 1. Januar 2008 (2008-01-01), Seiten 424-432, XP055689160, US ISSN: 1520-6106, DOI: 10.1021/jp0761416) ein Verfahren zur Modellierung eines aus einem konventionell beschreibbaren Bades und einem quantenmechanisch zu beschreibenden Cluster bestehenden Systems, dessen Systemelemente jeweils zwei Zustände einnehmen können, vorbekannt.

Vor diesem Hintergrund liegt der vorliegenden Erfindung die Aufgabe zugrunde, ein Verfahren vorzuschlagen, mit dem trotz der genannten Unwägbarkeiten dennoch eine verwertbare Modellierung auch komplexer Systeme erreicht werden kann.

Dies gelingt durch ein Verfahren zur Modellierung eines Systems mithilfe eines Quantencomputers gemäß den Merkmalen des Anspruchs 1. Sinnvolle Ausgestaltungen eines solchen Verfahrens können den sich anschließenden abhängigen Ansprüchen entnommen werden.

Erfindungsgemäß ist es vorgesehen, ein zu modellierendes System mit Systemelementen von jeweils zwei Zuständen zunächst hinsichtlich seines Aufbaus und seiner Struktur zu analysieren und einen besonders relevanten Teil des Systems, das so genannte Cluster, zu identifizieren, welches möglichst exakt beschrieben werden soll. Weniger relevante Bereiche des abzubildenden Systems, welche konventionell beschreibbar sind, werden als Bad bezeichnet, analog zu dem Begriff einer als Wärmebad fungierenden, bereits eingangs des Systems eine Temperatur aufweisenden Umgebung. Relevante Bereiche des Systems, welchen eine besondere Aufmerksamkeit gewidmet werden soll und die quantenmechanisch beschrieben werden sollen, werden als Cluster bezeichnet. Eine solche Trennung in Bad und Cluster wird gemäß der Erfindung in einem ersten Schritt vorgenommen.

Es gilt nunmehr, dieses System durch einen Quantencomputer abbilden zu lassen. Hierbei ist es vorgesehen, auch eine Unterteilung zwischen verschiedenen Qubits vorzunehmen. Derzeit bekannte Quantencomputer werden mit etwa 50 bis 70 Qubits hergestellt, welche jedoch nach der eingangs vorgenommenen Definition nicht alle zu den hochperformanten Qubits zählen. Die Eigenschaften können bei einzelnen Qubits und Paaren von Qubits, die miteinander 2-Qubit-Operationen ausführen können, analysiert werden. Basierend darauf können die Qubits nach vorstehender Definition als hochperformante und niederperformante Qubits eingeordnet werden. Diese Einteilung kann beispielsweise im Verhältnis der auf dem Chip vorhandenen Qubits, basierend auf der benötigten Anzahl hochperformanter Qubits oder anhand eines festen Grenzwertes erfolgen. Eine solche Auswertung muss mithin nur einmal vorgenommen werden, um die hochperformanten Qubits herauszufinden, sie kann aber durchaus bedarfsweise zu späteren Zeitpunkten wiederholt oder auch regelmäßig ausgeführt werden.

Im Rahmen des vorliegenden Verfahrens erfolgt sodann eine Zuordnung der hochperformanten Qubits zur Modellierung der Systemelemente des Clusters, während das Bad durch die niederperformanten Qubits abgebildet wird. Dies erlaubt eine zuverlässige und exakte Beschreibung der relevanten Modellteile, während qualitätsbedingt fehlerbehaftete Berechnungen hauptsächlich in den Bereichen des Bades, also der weniger relevanten Teile des Systems stattfinden.

Mit besonderem Vorteil zählen zu den der Bewertung zugrundegelegten Systemeigenschaften der Qubits deren Dekohärenzzeiten, Qualität der Übergängezwischen verbundenen Qubits und deren Wechselwirkungen aufeinander und die Güte der 2-Qubit-Operationen, welche gemessen und als Eigenschaft zu den einzelnen Qubits hinterlegt werden. Je länger die Dekohärenzzeit eines Qubits ist, desto länger wird dieses ohne weitere Anregung in einem angenommenen Zustand verbleiben und desto sicherer ist das über dieses Qubit ermittelte Ergebnis. Je höher die Güte der Operationen des Qubits oder Qubit-Paars, desto höher ist auch die Güte, mit welcher die Eigenschaften des Systems modelliert werden können.

Bei der Modellierung des Clusters durch die hochperformanten Qubits kann im Einzelnen so verfahren werden, dass die abzubildenden Systemelemente und ihre Wechselwirkungen durch die Qubits dargestellt werden. Umgekehrt wird jedoch bei den Systemelementen des Bades, welche von den niederperformanten Qubits abgebildet werden, anders verfahren. Mithilfe weniger niederperformanter Qubits werden nur die Kerneigenschaften des Bades repräsentiert, welche die Wirkung des Bades auf das Cluster erfassen. Eine Möglichkeit ist die Repräsentation der Badeigenschaften durch ihr Spektrum, etwa die spektrale Leistungsdichte. Aufgrund der durch die geringe Dekohärenzzeit großen Spektrenbreite dieser niederperformanten Qubits kann der Beitrag mehrerer Systemelemente des Bades zusammengefasst und diese Systemelemente so gemeinsam mithilfe eines niederperformanten Qubits abgebildet werden. Es werden also die natürlichen Fehler der Qubits genutzt, um die Simulation des Bades zu ermöglichen.

Zur weiteren Vereinfachung und Einsparung von Kapazität kann ferner das Bad auf im Rahmen des Mappingvorgangs definierte wesentliche Charakteristiken reduziert werden, über welche das Bad für die Zwecke der Modellierung ausreichend beschrieben wird. Durch den gezielten Wegfall von zusätzlichen Informationen können weitere Qubits eingespart werden, und auf diese Weise das Modell vollständig, wenngleich in einer niedrigen Detaillierung modelliert werden.

In einer konkreten Anwendung kann das vorstehend beschriebene Verfahren zur Berechnung fermionischer Modelle, insbesondere von Festkörpermodellen oder Molekülmodellen, herangezogen werden.

Ferner eignet sich das Verfahren zur Abbildung von Heisenbergmodellen oder XYZ-Modellen, sowie weiterer Spinmodelle.

Aber auch allgemeinere Fragestellungen, wie Optimierungsprobleme, wie etwa ein QUBO-Problem oder eine Boltzmann-Maschine kann mit dem beschriebenen Verfahren modelliert werden.

Die vorstehend beschriebene Erfindung wird im Folgenden anhand eines Ausführungsbeispiels näher erläutert.

Es zeigen
- Figur 1: eine schematische Darstellung der Zuordnung zwischen Systemelementen eines abzubildenden Systems und den Qubits eines Quantencomputers, am Beispiel der Modellierung eines Moleküls,
- Figur 2: ein Diagramm zur Darstellung eines Teilausschnitts von Zuständen aus dem Bad am Beispiel der Modellierung eines Moleküls, sowie
- Figur 3: das Diagramm gemäß Figur 2 mit einer Zuordnung zu einzelnen Qubits.

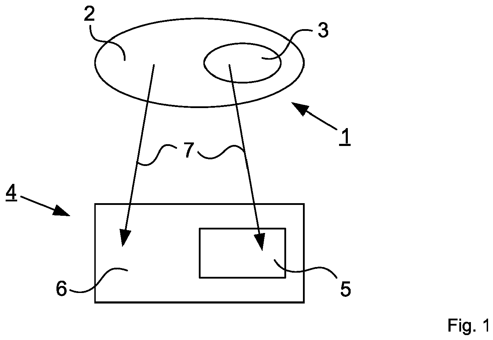

Figur 1 zeigt eine schematische Darstellung eines zu modellierenden Systems 1, im vorliegenden Fall eines Moleküls, dessen Verhalten simuliert werden soll, um seine Eignung als Medikament zu prüfen. In diesem Zusammenhang ist es bekannt, dass Moleküle einzelne funktionelle Gruppen aufweisen, welche als Rezeptoren für bestimmte Stoffe dienen. Während die Funktionalität des Medikaments als solches im Wesentlichen davon abhängt, wie sich diese Gruppen verhalten, kommt es im Einzelnen auf den Rest des Moleküls weniger an, es stellt lediglich den Träger der funktionellen Gruppen dar. Zwar muss dieser Rest vorhanden sein, für eine geeignete Modellierung aber nicht notwendigerweise im Detail beschrieben werden.

Insoweit stellt dieses Molekül ein zu beschreibendes System 1 dar, welches in ein Cluster 3, nämlich die besagten funktionellen Gruppen, sowie ein Bad 2, nämlich der Molekülrest, untergliedert werden kann. Während also das Cluster 3 möglichst exakt modelliert und dadurch simuliert werden soll, reicht eine grobe Modellierung des Bades 2 für die Zwecke der Prüfung des Moleküls auf seine Eignung als Medikament vollkommen aus.

Daher erfolgt im Rahmen eines Mappingvorgangs 7 die Zuordnung des Bades 2 zu niederperformanten Qubits 6, des Clusters 3 zu hochperformanten Qubits 5 innerhalb eines Quantencomputers 4.

Dadurch, dass der wenig relevante Teil des Moleküls durch die niederperformanten Qubits 6 dargestellt wird, während die relevanten Teile im Cluster 3 durch die wenigen hochperformanten Qubits 5 berechnet werden, kann sichergestellt werden, dass die erforderliche Berechnungsgenauigkeit mit dem größtmöglichen Effekt durchgeführt werden kann. Trotzdem fehlerbehaftete Berechnungen stattfinden, werden diese hauptsächlich auf einen unbedeutenden Teil der Berechnung verlegt, um auf diese Weise zu einem verwertbaren Ergebnis zu gelangen und den besonderen Effekt des Quantencomputers 4 trotz seiner Schwächen ausnutzen zu können. Umgekehrt werden sogar die fehlerhaften Berechnungen vielmehr so genutzt, dass sie Eigenschaften des Moleküls reproduzieren. Dadurch können wesentlich größere Systeme dargestellt werden, als eigentlich auf dem jeweiligen Quantencomputer möglich wäre.

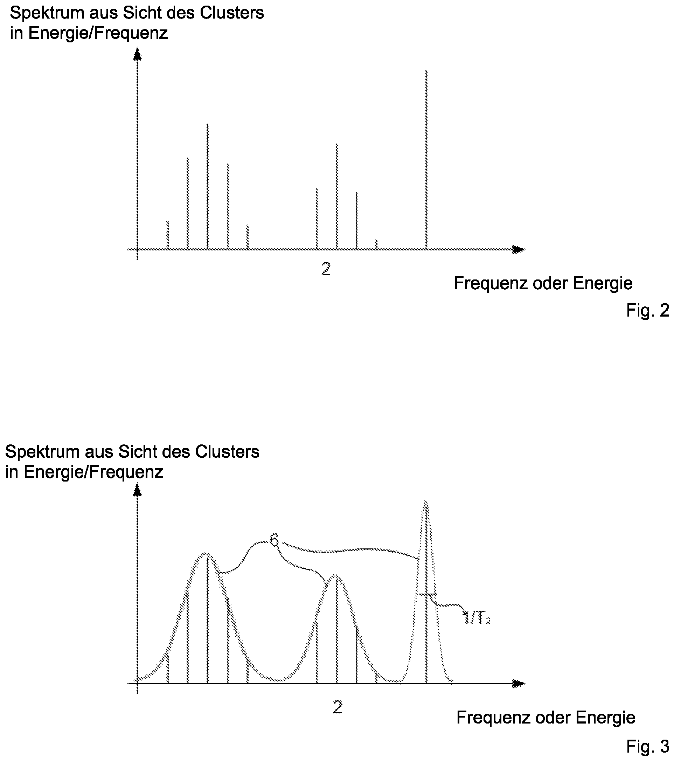

Die Orbitale des Clusters 3 werden mit ihren Wechselwirkungen durch die hochperformanten Qubits 5 dargestellt. Die Orbitale des Bades 2 werden nur näherungsweise durch ihre Kerneigenschaften repräsentiert. Das kann beispielsweise mithilfe ihres Spektrums geschehen. Dies funktioniert, wie in den Figuren 2 und 3 dargestellt. Gezeigt sind auf der Ebene der Energieniveaus einzelne klassisch beschreibbare Zustände von Systemelementen, wobei es sich im vorliegenden Fall eines Moleküls um Orbitale innerhalb des Moleküls handeln soll. Diese können, je nach Anwesenheit eines Elektrons einen Zustand 0 oder einen Zustand 1 annehmen. Für die Wirkung des Bades 2 auf das Cluster 3 ist die Existenz von Zustandswerten in bestimmten Bereichen wesentlich. Die Dirac-Impulse stellen die diskreten Zustandswerte bzw. Orbitale des Molekülrests bzw. des Bades dar.

Jedes Orbital soll im Rahmen der Modellierung durch ein Qubit 5, 6 beschrieben werden, dessen Zustand dem Zustand des jeweiligen Orbitals entspricht. Die Qubits ihrerseits können folglich den Zustand |0> oder |1> annehmen, aber auch Superpositionen dazwischen, so dass die quantenmechanische Beschreibung der Orbitale als ausgesprochen zutreffend angesehen werden muss.

Wie aus der Figur 3 hervorgeht, können die Zustandsbereiche der Qubits mit Lorentzkurven beschrieben werden, welche in der Mathematik einer Annäherung an den Dirac-Impuls entspricht. Je schmaler hierbei die Lorentzkurve ist, desto länger ist die Dekohärenzzeit des zugehörigen Qubits 5, 6. Ferner wird die Breite der Kurve zusätzlich zur Dekohärenzzeit auch von der Güte der Operationen beeinflusst, da die Spektren auch durch diese Operationen erzeugt werden. Niederperformante Qubits 6 können verwendet werden, um gleich mehrere Zustandswerte darzustellen, so dass ein niederperformantes Qubit 6 mehrere Systemelemente, also Orbitale, zwar stark vereinfacht, aber folglich mit einem geringen Aufwand abbilden kann. Es gelingt dadurch, trotz der in sehr beschränktem Maße vorhandene Qubits 5, 6, von denen es in aktuellen Quantencomputern 4 nur etwa 50 bis 70 gibt, auch komplexere Moleküle treffend zu simulieren und dadurch die Möglichkeiten des Quantencomputers bestmöglich auszunutzen.

Vorstehend beschrieben ist somit ein Verfahren, mit dem trotz einiger Unwägbarkeiten bekannter Quantencomputer dennoch eine verwertbare Modellierung auch komplexer Systeme erreicht werden kann.

### BEZUGSZEICHENLISTE

- 1: System
- 2: Bad
- 3: Cluster
- 4: Quantencomputer
- 5: hochperformante Qubits
- 6: niederperformante Qubits
- 7: Mappingvorgang
- T₂: Dekohärenzzeit

## Patentansprüche

1. Verfahren zum Mapping (7) von Qubits eines Quantencomputers (4), welcher eine Mehrzahl von Qubits (5, 6) aufweist, zur Simulation eines aus einem konventionell beschreibbaren Bad (2) und einem quantenmechanisch zu beschreibenden Cluster (3) bestehenden Systems (1), dessen Systemelemente jeweils zwei Zustände einnehmen können,
**dadurch gekennzeichnet, dass** die Qubits (5, 6) des Quantencomputers (4) hinsichtlich ihrer Systemeigenschaften bewertet und in hochperformante Qubits (5) und niederperformante Qubits (6) kategorisiert werden, wobei zur Bewertung der Qualität und Güte der Qubits (5, 6) des Quantencomputers (4), Operationen auf einzelnen und verbundenen Qubits (5, 6) des Quantencomputers (4) durchgeführt und gemessen werden, wobei die Qualität der Qubits (5, 6) durch Messung ihrer Dekohärenzzeit (T2) bestimmt wird und die Güte der Qubits (5, 6) durch Messung der Reproduktionstreue (Fidelity) der 1-Qubit und 2-Qubit-Operationen bestimmt wird, und eine Zuordnung der hochperformanten Qubits (5) des Quantencomputers (4) zur Simulation des Clusters (3) sowie eine Zuordnung der niederperformanten Qubits (6) zur Simulation des Bades (2) vorgenommen wird, und das System (1) auf dem Quantencomputer (4) unter Verwendung der Zuordnung simuliert wird.

2. Verfahren nach Anspruch 1, **dadurch gekennzeichnet, dass** die Kategorisierung der Qubits (5, 6) in hochperformante Qubits (5) und niederperformante Qubits (6) gemäß einem oder mehreren der folgenden Paradigmen getroffen wird: Anzahl der benötigten hochperformanten Qubits (5), Verhältnis der Qualitäten der in dem Quantencomputer (4) vorhandenen Qubits (5, 6) oder feste Grenzwerte der Reproduktionstreue (Fidelity) der 1-Qubit- und 2-Qubit-Operationen.

3. Verfahren gemäß einem der Ansprüche 1 oder 2, **dadurch gekennzeichnet, dass** im Rahmen der Modellierung des Clusters (3) durch die hochperformanten Qubits (5) jedes Systemelement durch hochperformante Qubits (5) beschrieben wird.

4. Verfahren gemäß einem der Ansprüche 1 bis 3, **dadurch gekennzeichnet, dass** im Rahmen der Modellierung des Bades (2) durch die niederperformanten Qubits (6) mehrere Systemelemente von einer geringeren Anzahl an niederperformanten Qubits (6) modelliert werden.

5. Verfahren gemäß Anspruch 4, **dadurch gekennzeichnet, dass** die niederperformanten Qubits (6) eine spektrale Dichte des Bades (2) modellieren.

6. Verfahren gemäß einem der vorhergehenden Ansprüche, **dadurch gekennzeichnet, dass** es sich bei dem System (1) um ein fermionisches Modell, insbesondere um ein Molekülmodell oder ein Festkörpermodell, handelt.

7. Verfahren gemäß Anspruch 6, **dadurch gekennzeichnet, dass** es sich bei den Molekülmodellen um Moleküle mit aktivem Zentrum, Moleküle mit funktionellen Gruppen, Moleküle mit begründeter Auswahl eines relevanten Bereiches oder Moleküle in bestimmten Umgebungen, oder bei den Festkörpern um Modellsysteme, wie das Hubbard-Modell oder realistische Festkörper handelt.

8. Verfahren gemäß einem der Ansprüche 1 bis 5, **dadurch gekennzeichnet, dass** es sich bei dem System (1) um ein Heisenbergmodell, ein XYZ-Modell oder ein anderes Spinmodell handelt.

9. Verfahren gemäß einem der Ansprüche 1 bis 5, **dadurch gekennzeichnet, dass** es sich bei dem System (1) um ein QUBO-Problem, eine Boltzmann-Maschine oder ein anderes Optimierungsproblem handelt.

## Claims

1. Method for mapping (7) qubits of a quantum computer (4), which has a plurality of qubits (5, 6), for simulating a system (1) consisting of a conventionally describable bath (2) and a cluster (3) to be described quantum-mechanically, the system elements of which can each assume two states,
**characterized in that** the qubits (5, 6) of the quantum computer (4) are evaluated with regard to their system properties and categorized into high-performance qubits (5) and low-performance qubits (6), operations being carried out and measured on individual and connected qubits (5, 6) of the quantum computer (4) in order to evaluate the quality and excellence of the qubits (5, 6) of the quantum computer (4), wherein the quality of the qubits (5, 6) is determined by measuring their decoherence time (T2) and the excellence of the qubits (5, 6) is determined by measuring the fidelity of the 1-qubit and 2-qubit operations, and wherein the high-performance qubits (5) of the quantum computer (4) are assigned to the simulation of the cluster (3) and the low-performance qubits (6) are assigned to the simulation of the bath (2), and wherein the system (1) is simulated on the quantum computer (4) using the assignment.

2. The method according to claim 1, **characterized in that** the categorization of the qubits (5, 6) into high-performance qubits (5) and low-performance qubits (6) is made according to one or more of the following paradigms: The number of high-performance qubits (5) required, the ratio of the qualities of the qubits (5, 6) present in the quantum computer (4) or fixed limit values for the fidelity of the 1 -qubit and 2-qubit operations.

3. The method according to any one of claims 1 or 2, **characterized in that**, during the modeling of the cluster (3) by the high-performance qubits (5), each system element is described by high-performance qubits (5).

4. The method according to any one of claims 1 to 3, **characterized in that**, during the modeling of the bath (2) by the low-performance qubits (6), a plurality of system elements are modeled by a smaller number of low-performance qubits (6).

5. The method according to claim 4, **characterized in that** the low-performance qubits (6) model a spectral density of the bath (2).

6. The method according to any one of the preceding claims, **characterized in that** the system (1) is a fermionic model, in particular a molecular or a solid model.

7. The method according to claim 6, **characterized in that** the molecular models are molecules with an active center, molecules with functional groups, molecules with a justified selection of a relevant area or molecules in specific environments, or **in that** the solids are model systems, such as the Hubbard model or realistic solids.

8. The method according to any one of claims 1 to 5, **characterized in that** the system (1) is a Heisenberg model, an XYZ model or another spin model.

9. The method according to any one of claims 1 to 5, **characterized in that** the system (1) is a QUBO problem, a Boltzmann machine or another optimization problem.

## Revendications

1. Procédé pour la mise en correspondance (7) des qubits d'un ordinateur quantique (4), qui possède une pluralité de qubits (5, 6), pour simuler un système (1) constitué d'un bain conventionnellement descriptible (2) et d'une grappe (3) à décrire par mécanique quantique, dont les éléments du système peuvent chacun prendre deux états,
**caractérisé en ce que** les qubits (5, 6) de l'ordinateur quantique (4) sont évalués relatif à leurs propriétés de système et classés en qubits à haute performance (5) et qubits à faible performance (6), des opérations étant effectuées et mesurées sur des qubits individuels et connectés (5, 6) de l'ordinateur quantique (4) afin d'évaluer la qualité et l'excellence des qubits (5, 6) de l'ordinateur quantique (4), dans lequel la qualité des qubits (5, 6) est déterminée par la mesure de leur temps de décohérence (T2) et l'excellence des qubits (5, 6) est déterminée par la mesure de la fidélité des opérations 1-qubit et 2-qubit, et dans lequel les qubits à haute performance (5) de l'ordinateur quantique (4) sont affectés à la simulation de la grappe (3) et les qubits à faible performance (6) sont affectés à la simulation du bain (2), et dans lequel le système (1) est simulé sur l'ordinateur quantique (4) à l'aide de l'affectation.

2. Le procédé selon la revendication 1, **caractérisée en ce que** la catégorisation des qubits (5, 6) en qubits à haute performance (5) et qubits à faible performance (6) est effectuée selon un ou plusieurs des paradigmes suivants: le nombre de qubits à haute performance (5) requis, le rapport des qualités des qubits (5, 6) présents dans l'ordinateur quantique (4) ou des valeurs limites fixes pour la fidélité des opérations 1-qubit et 2-qubits.

3. Le procédé selon l'une des revendications 1 ou 2, **caractérisée en ce que**, lors de la modélisation de la grappe (3) par les qubits à haute performance (5), chaque élément du système est décrit par des qubits à haute performance (5).

4. Le procédé selon l'une des revendications 1 à 3, **caractérisée en ce que**, lors de la modélisation du bain (2) par les qubits à faible performance (6), plusieurs éléments du système sont modélisés par un plus petit nombre de qubits à faible performance (6).

5. Le procédé selon la revendication 4, **caractérisée en ce que** les qubits à faible performance (6) modélisent une densité spectrale du bain (2).

6. Le procédé selon l'une quelconque des revendications précédentes, **caractérisé en ce que** le système (1) est un modèle fermionique, notamment un modèle moléculaire ou un modèle solide.

7. Le procédé selon la revendication 6, **caractérisée en ce que** les modèles moléculaires sont des molécules avec un centre actif, des molécules avec des groupes fonctionnels, des molécules avec une sélection justifiée d'une zone pertinente ou des molécules dans des environnements spécifiques, ou que les solides sont des systèmes modèles, tels que le modèle de Hubbard ou des solides réalistes.

8. Le procédé selon l'une des revendications 1 à 5, **caractérisée en ce que** le système (1) est un modèle de Heisenberg, un modèle XYZ ou un autre modèle de spin.

9. Le procédé selon l'une des revendications 1 à 5, **caractérisée en ce que** le système (1) est un problème QUBO, une machine de Boltzmann ou un autre problème d'optimisation.
